(19)

**Europäisches Patentamt**

**European Patent Office**

**Office européen des brevets**

(11) **EP 4 715 732 A1**

(12) **EUROPEAN PATENT APPLICATION**

(43) Date of publication:
**25.03.2026 Bulletin 2026/13**

(51) International Patent Classification (IPC):
**G06T 7/00** *(2017.01)*     **G06T 7/11** *(2017.01)*
**G06T 7/194** *(2017.01)*

(21) Application number: **24202132.7**

(22) Date of filing: **24.09.2024**

(52) Cooperative Patent Classification (CPC):
**G06T 7/11; G06T 7/0012; G06T 7/194;**
G06T 2207/10088; G06T 2207/20081;
G06T 2207/20084; G06T 2207/30016

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Healthineers AG**
**91301 Forchheim (DE)**

(72) Inventors:
• **Disselhorst, Johannes**
**1004 Lausanne (CH)**
• **Di Noto, Tommaso**
**1006 Lausanne (CH)**
• **Ravano, Veronica**
**1024 Ecublens (CH)**

(74) Representative: **Fischer, Michael**
**Siemens Schweiz AG**
**Intellectual Property**
**Freilagerstrasse 40**
**8047 Zürich (CH)**

(54) **SYSTEM AND METHOD FOR ANALYZING A MAP OF A BIOLOGICAL OBJECT WITH OPTIMIZED LONGITUDINAL COMPATIBILITY**

(57)     The invention relates to a system (200) and a method (300) for analyzing a map of a part of a biological object, the method (300) comprising:
- acquiring (301) a first map (401) representing said part at a first time point;
- acquiring (302) a second map (402) representing said part at a second time point different from the first time point;
- using (303) the first map (401) and the second map (402) as input to a trained main machine learning (ML) algorithm configured for providing an output that comprises (i) a change mask M_changes highlighting or showing longitudinal changes between the first map (401) and the second map (402) and/or (ii) a segmentation of at least one of said first and second maps, wherein the segmentation of the first map results in a first segmentation mask M1 (411) and the segmentation of the second map results in a second segmentation mask M2 (412), wherein said main ML algorithm has been trained for optimizing, notably maximizing, a compatibility between M1, M2, and said change mask M_changes;
- providing (304), via an interface (202), said output of the trained main ML algorithm.

FIG 4

EP 4 715 732 A1

**Description**

**Technical Field**

The present disclosure is directed, in general, to longitudinal imaging techniques used for imaging a temporal evolution of a biological object, like a brain, notably in the field of Magnetic Resonance Imaging (MRI). More specifically, the present invention is directed to methods and systems for detecting longitudinal changes occurring in a part of the biological object from images acquired for said biological object at different time points.

**Background Art**

In the past decades, the emergence of deep learning techniques and the advancements of biomedical imaging have led to the development of numerous automated tools for the extraction of quantitative imaging biomarkers. Those are aimed either at optimizing radiological workflows by replacing tedious and time-consuming tasks, or at providing additional information which can contribute to patient care. For example, the diagnosis and radiological monitoring of patients with multiple sclerosis relies on the detection and monitoring of the volumetric evolution of white matter lesions from MRI scans. In fact, the prevalence of lesions characterized by a volumetric expansion over time was shown to be associated with worse disability and prognosis [1]. As a single patient can have numerous lesions, assessing their evolution over time, by comparing MR images from different time points, is typically cumbersome. Further, on the single lesion level, detecting a volume difference between several timepoints with the naked eye is challenging, as volumetric changes can be very subtle. Therefore, techniques that allow both the detection of lesions from single images, and their monitoring over time are required.

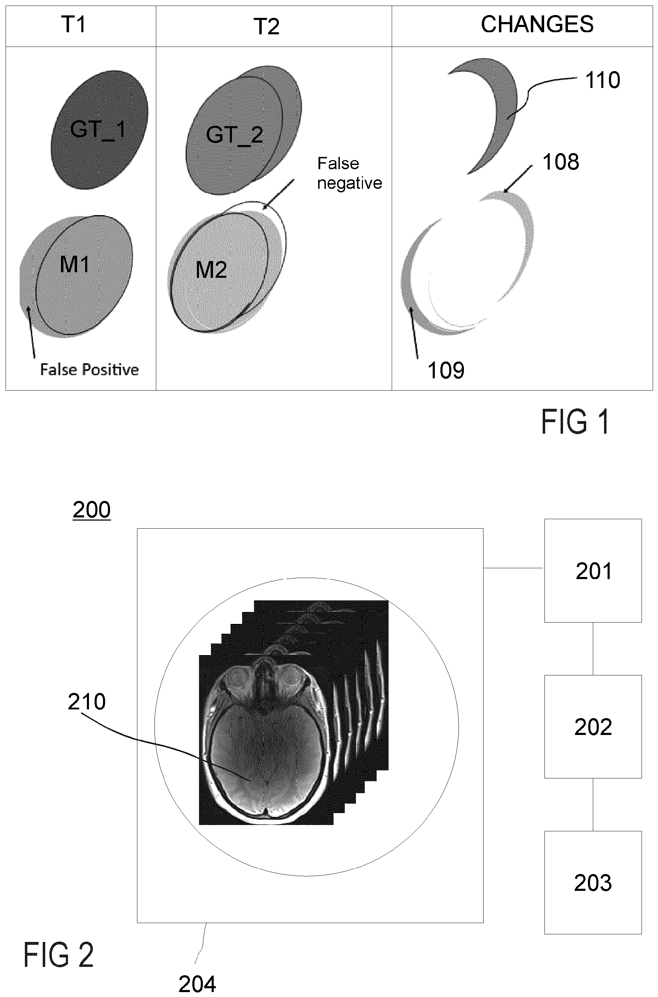

While many automated algorithms have been proposed for the cross-sectional analysis of medical images [2, 3], solutions that quantify longitudinal changes are scarce due to the underlying technical challenges related to the detection of subtle changes and to the scarcity of available training data. The sensitivity of algorithms providing a longitudinal monitoring of a biomarker based on automated cross-sectional tools is limited by the variability underlying the latter. In fact, automated biomarker extraction tools are characterized by an intrinsic margin of error, which relates to the algorithm accuracy, and which limits the sensitivity of longitudinal analyses. For example, if a lesion has a real volume of 10mL in the first timepoint, and grows to 12mL in the second timepoint, its enlargement can only be detected if the variability of the cross-sectional segmentation is lower than $\pm$1mL in each time point. This is better illustrated by Figure 1 wherein the top images represent the ground truth volume in two subsequent time points, namely a first time point (Time point 1 on the left) and a second time point (Time point 2 in the center) which takes place for instance after the first time point, and the top right image shows the real enlargement between the two. "Ground truth" refers here to information that is known to be real or true, provided for instance by direct observation and measurement. The bottom images represent the results of a cross-sectional segmentation pipeline showing an oversegmentation in the first time point (left) with a false positive, an undersegmentation in the second time point (center) with a false negative, resulting in an underestimation of the actual enlargement and an overestimation of the shrinkage.

Before the advent of (deep) machine learning, deformation-based methods have been explored to track evolving processes in medical images. For instance, Rey et al. [4] investigated the use of displacement fields to detect and segment multiple sclerosis lesions. Then, to overcome the limitation of reduced sensitivity when directly comparing two cross-sectional results, techniques that are totally or partially independent from cross-sectional analysis have been proposed. For example, a previous work [5] has suggested to use the segmentation from both timepoints separately, in combination with a difference image defined as the voxel-wise intensity difference between the two timepoints. The latter highlights the areas with a substantial change in intensity which can be associated to the volumetric expansion or shrinkage of a lesion. Other works [6] have suggested to use a particular type of neural network composed by an encoding and a decoding end, trained to provide a map of longitudinal changes from both timepoints. During training, images from both timepoints are processed in parallel through the encoding end, resulting in latent feature maps. These feature maps are then combined and fed as input to the decoding end, which learns to detect differences.

However, these longitudinal techniques are partly independent from their cross-sectional counterpart because the decoder is only trained on longitudinal data. Therefore, they can still lead to incoherent and potentially biased results with respect to the cross-sectional ground truth. For example, the cross-sectional algorithm might have the tendency towards an overestimation of lesion volume due to partial volume, whilst the detection of longitudinal enlargement might suffer from a bias in the opposite direction. The discordance between the cross-sectional and longitudinal results is not only constituting a challenge in terms of quantitative analyses, but it can also be a major source of confusion for the end-user, who might be exposed to inconsistent results when considering both the cross-sectional and the longitudinal results simultaneously. Therefore, methods and systems that ensure that the results of the longitudinal analyses are concordant with the cross-sectional techniques are required. In particular, there is still a need for automated tools that can specifically perform longitudinal analyses while providing coherent results with respect to cross-sectional biomarker extraction tools.

Summary of Invention

An objective of the present invention is to propose a method and a system for monitoring a temporal evolution of a biological object that overcome the above-mentioned issues.

Said objective is achieved according to the present invention by a method and a system for analyzing a map of a part of a biological object with optimized longitudinal compatibility according to the independent claims, wherein said analysis is able to take into account a longitudinal change occurring for said part. Dependent claims present further advantages of the invention.

The present invention proposes notably to detect a longitudinal change in longitudinal maps (here, "longitudinal maps" refers to maps representing an object at two different time points, it can be for instance longitudinal images acquired at two different time points) of a part of a biological object and/or to segment at least one of said longitudinal maps while taking into account said longitudinal change.

The present invention concerns, in particular, a method for analyzing a map of a part of a biological object, e.g. for detecting a longitudinal change in longitudinal maps (for instance longitudinal images obtained through MRI) of a part of a biological object and/or for segmenting at least one of said longitudinal maps while taking into account said longitudinal change, the method comprising:

- acquiring a first map representing said part at a first time point. Said first map might be a map of said part acquired at said first time point and called hereafter "prior map";
- acquiring a second map representing said part at a second time point. The second time point is different from the first time point, notably temporally located after the first time point. The second map might be a map of said part acquired at said second time point and called hereafter "current map";
- using the first map and the second map as input to a trained main machine learning (ML) algorithm configured for providing an output that comprises (i) a change mask

M_changes configured for highlighting, e.g. representing or showing, longitudinal changes between the first map and the second map and/or (ii) a segmentation of the first map and a segmentation of the second map, wherein the segmentation of the first map is called hereafter "first segmentation mask M1" and the segmentation of the second map is called hereafter "second segmentation mask M2", wherein said main ML algorithm has been trained for optimizing, notably maximizing, a compatibility between M1, M2, and M_change;

- providing, via an interface, said output of the trained main ML algorithm.

The present invention concerns also a computer-implemented method for providing the trained main ML algorithm. According to the present invention, the main ML algorithm comprises a first ML algorithm (e.g. a first CNN), called hereafter N_cross, and/or a second ML algorithm (e.g. a second CNN), called hereafter N_long, wherein N_cross is configured for segmenting a map received as input and for providing as output a segmentation mask for the received map, wherein N_long is configured for detecting longitudinal changes between two longitudinal maps received as input (i.e. a first map representing said part at a time T1 and at least a second map representing said part at a time T2 different from T1) and outputting a change mask M_changes representing the detected changes. The training of the main ML algorithm can comprise receiving a trained N_cross and using an output or information extracted from the latter for training N_long, or receiving a trained N_long and using an output of the latter or information extracted from the latter for training N_cross, or training both N_long and N_cross, for instance simultaneously, or by fully or partially training N_long or N_cross first.

In particular, said main ML algorithm can be trained according to said computer-implemented method for outputting a change mask M_change when receiving as input longitudinal maps of a part of a biological object, said longitudinal maps comprising at least a first map representing said part at a first time point and a second map representing said part at a second time point. The change mask M_change according to the invention is configured for highlighting, e.g. representing or showing, longitudinal changes between the received longitudinal maps (i.e. between the first time point map and the second time point map, showing differences detected between said maps). Preferentially, the computer-implemented method for training the main ML algorithm comprises training at least N_long, implemented according to the following steps:

- acquiring a first N_long input training dataset comprising, for each training biological object of a set of training biological objects, at least one map representing said part at a first time point and at least one corresponding map representing said part at a second time point different from the first time point, so that, for each training biological object, its part is represented by at least two maps (i.e. longitudinal maps) representing the part at two different time points, namely said first time point and said second time point. Said map representing the part at the first time point and said map representing said part at a second time point are respectively, and for instance, a map of said part acquired at said first time point (i.e. the so-called prior map) and respectively a map of said part acquired at the second time point (i.e. the so-called current map), or, a preprocessed map obtained from said prior map, notably obtained from N_cross, and respectively a preprocessed map obtained from said current map, notably obtained from N_cross. Preferentially, the preprocessed maps obtained from said prior and current maps have each been obtained through N_cross;

- acquiring a second input training dataset comprising, for each training biological object of said set of training biological objects, and for the concerned training biological object, for each map representing its part at the first time point, a first training segmentation mask M_T_1 representing at least one region-of-interest (hereafter ROI) within said part of the training biological object, wherein said first training segmentation mask M_T_1 has been obtained from said map representing said part at the first time point, and, for each corresponding map representing the part at the second time point, a corresponding second training segmentation mask M_T_2 representing said ROI within said part, wherein said second training segmentation mask M_T_2 has been obtained from said map representing said part at the second time point different from the first time point. Preferably, the mask M_T_1 and M_T_2 are respectively obtained from the prior and current maps of said part, and, in this case, called respectively M_prior and M_current;

- acquiring an N_long output training dataset comprising, for each training biological object of said set of training biological objects, and for said training biological object, for each couple formed by a first segmentation mask and its corresponding second segmentation mask, a related training change mask M_T_changes representing longitudinal changes that took place between said map representing the training biological object part at the first time point and its corresponding map representing said part of the training biological object at the second time point. M_T_changes is typically a ground truth mask representing said changes, obtained for instance by manually labeling said longitudinal changes;

- for each of said training biological objects, training N_long for said detection of longitudinal changes based on said first N_long input training dataset, said second N_long input training dataset, and said N_long output training dataset defined for the concerned training biological object;

- providing the trained main ML algorithm via an output interface; wherein, for each training biological object, the ML algorithm is trained to optimize (e.g. maximize) a compatibility between the first training segmentation mask M_T_1, the second training segmentation mask M_T_2, and M_changes. After its training, N_long will thus provide a better compatibility between M1, M2, and M_changes.

In particular, said main ML algorithm can be trained according to said computer-implemented method for outputting a segmentation of at least one of the longitudinal maps of a part of a biological object when receiving said longitudinal maps as input, said main ML algorithm being preferentially configured for outputting a segmentation of each of said longitudinal maps, wherein training the main ML algorithm comprises training at least N_cross by implementing the following steps:

- acquiring an N_cross input training dataset comprising, for each training biological object of a set of training biological objects (which can be the same or different from the one used for training N_long), at least one map representing said part at a first time point, said map can be for instance a so-called prior map of said part, and at least one "corresponding" map representing said part at a second time point different from the first time point, said map can be for instance a so-called current map of said part, so that, for each training biological object, its part is represented by at least two longitudinal maps representing the part at two different time points, namely said first time point and said second time point;

- for each training biological object, acquiring an N_cross output training dataset comprising, for each of said training biological objects, and, for said training biological object, for each of the maps representing said part at the first time point, a segmentation mask, called hereafter prior ground truth mask GT_prior, and, respectively or, for each of the maps representing said part at the second time point, another segmentation mask called hereafter current ground truth mask GT_current, wherein GT_prior and GT_current represent respectively an ROI, e.g. one or more ROIs, within said part at said first time point and said ROI at said second time point;

- training N_cross for said segmentation of longitudinal images based on the N_cross input training dataset and the N_cross output training dataset;

- providing the trained main ML algorithm via an output interface; wherein the main ML algorithm is trained to optimize (e.g. maximize) a compatibility between (i) M1, M2, and M_T_changes, or respectively (depending on which one among GT_prior and GT_current was acquired) between (ii) M1 or M2, and M_T_changes, wherein, for each training biological object, and, for the concerned training biological object, for each couple of maps formed by a map representing the part at the first time point and its corresponding map representing the part at the second time point, and thus, in case (i), for each couple formed by GT_prior and GT_current obtained for the couple of maps, there is a corresponding M_T_changes that is a change mask representing longitudinal changes occurring between said maps of the couple of maps, and that is thus related to the ground truth mask couple in case (i). As already explained, when receiving a set of training images comprises couples of images with one image or map representing said part of the biological object at a first time and a least another image representing said part at a second time, N_cross is configured for outputting at least one segmentation mask M_i, wherein i=1,2, with i=1 being associated to the first time, and i=2 being associated to the second time, and it is the compatibility of this output of N_cross, i.e. M1 and/or M2, with respect to M_T_changes that the training searches to optimize. After the training, N_cross will provide a better compatibility between its output and M_changes.

As explained earlier, while the training of N_cross and N_long can be made independently from each other, i.e. based each on a different set of training biological objects and in two separate training phases, one for N_cross and one for N_long, the training of the main ML algorithm can also comprise training both N_cross and N_long during a same training phase. In such a case, as for the training in separate training phases, the main ML algorithm is trained to provide an optimized (e.g. maximized) compatibility between M_changes and the segmentation masks M1 and M2, which are in this case outputted by N_cross. For this training of N_cross and N_long during a same training phase, the N_cross input training dataset and the N_long output training dataset might be used for training the main ML algorithm, wherein the same set of training biological objects might be taken for defining the N_cross input training dataset and the N_long output training dataset. During the training, the output of N_cross, i.e. the segmentation masks M1 and M2, is preferentially used as input to N_long.

The present invention concerns also a system for detecting a longitudinal change appearing in longitudinal maps of a part of a biological object and/or for segmenting at least one of said longitudinal maps while taking into account said longitudinal change, said biological object or part being for instance imaged by an imaging apparatus, e.g. MRI apparatus, the system comprising:

- a control unit configured for acquiring longitudinal maps representing said part of the biological object at least at a first time point and at a second time point different from the first time point, said control unit comprising a processor and a memory, said processor being configured for running a trained main ML algorithm;
- an interface for providing an output of the trained main ML algorithm, said output comprising a change mask M_changes and/or a segmentation of at least one of said longitudinal maps, said interface comprising for instance a display for displaying said output; said system being characterized in that its control unit is configured for carrying out the steps of the method according to the invention.

Description of Embodiments

The present invention proposes thus to train a main ML algorithm, whose output is a change mask M_change that presents differences between a pair of longitudinal maps received as input, wherein said main ML algorithm has been trained to provide an optimized compatibility between segmentation masks obtained from each of the longitudinal received longitudinal maps and M_change.

Preferentially, the longitudinal maps according to the invention, for instance said first map and said second map, can be maps representing a part at two different time points or maps acquired at said two different time points. In particular, said longitudinal maps are images of said part of the biological object, i.e. said maps comprise preferentially imaging data. They are for instance MRI maps, e.g. cross-sectional images of said part. Alternatively, said maps might comprise a combination of imaging and non-imaging data (e.g. each map might be a combination of an MR image and demographics information), or can comprise solely non-imaging data (e.g. each map comprises genetic data or clinical scores). The longitudinal maps according to the invention can be 1D, 2D (e.g., image), 3D (e.g., medical imaging volume), or higher dimensional maps, wherein each item (e.g., pixel or voxel) is associated to a parameter which may evolve over time (or changes in a quantitative value associated to said parameter), and wherein the temporal evolution between the considered time points of said parameter might be assessed by studying the overlap and the difference between maps acquired at different times.

In preferred embodiments, said main ML algorithm is configured for receiving as input an image of said part of the biological object acquired at a time point T1, i.e. at said first time point, and an image of said part of the biological object acquired at a time point T2, i.e. said second time point, different from T1, wherein the image acquired at T1 is called hereafter the prior image and the image acquired at T2 is called hereafter the current image, wherein said prior and current images are preferably cross-sectional images of said part.

For the training of the main ML algorithm, notably for training N_long, for each training biological object, said first training segmentation mask M_T_1 and said second training segmentation mask M_T_2 are respectively:

- a segmentation mask outputted by N_cross when processing said map representing the part of the training biological object at the first time point, said segmentation mask being for instance M_prior when said map is a prior map, and a segmentation mask outputted by N_cross when processing said map representing the part of the training biological object at the second time point, said segmentation mask being for instance M_current when said map is a current map;

or

-   a prior ground truth segmentation mask GT_prior obtained by labelling (for instance manually) voxels and/or regions of said map representing the part of the training biological object at the first time point (in order to create a first map segmentation that is said GT_prior), and a current ground truth segmentation mask GT_current that is obtained by labelling (for instance manually) voxels and/or regions of said map representing the part of the training biological object at the second time point (in order to create a second map segmentation that is said GT_current).

According to the present invention, N_cross and N_long are preferentially neural network algorithms, like Convolutional Neural Networks (CNN), like U-Nets, or any other algorithm. Preferentially, said preprocessed map obtained from said prior map is for instance an intermediate output of N_cross, e.g. a first latent feature map extracted from an intermediate layer of N_cross and called hereafter Lat_prior, obtained from N_cross when processing the map of said part acquired at the first time point (i.e. prior map) for said training biological object, and said preprocessed map obtained from said current map is for instance an intermediate output of N_cross, e.g. a second latent feature map extracted from said intermediate layer of N_cross and called hereafter Lat_current, obtained from N_cross when processing the map of said part acquired at the second time point (i.e. said current map) for said training biological object.

Preferentially, for optimizing said compatibility, the method comprises using a loss regularizer R for ensuring the compatibility between the first training segmentation mask M_T_1 (e.g. M_prior), the second training segmentation mask M_T_2 (e.g. M_current), and M_T_changes. Consequently, after the training of the main ML algorithm, the latter is able to ensure the compatibility between the segmentation masks obtained from the longitudinal maps received as input, i.e. M1 (e.g. M_prior) and M2 (e.g. M_current), and M_changes. In particular, said loss regularizer R is a function of the first segmentation mask M_T_1, the second segmentation mask M_T_2, and M_T_changes. Therefore, as a result of this training in function of the loss regularizer R, the trained main ML algorithm has a built-in compatibility between M1, M2, and M_changes, and enables thus to optimize the compatibility between M_prior, M_current, and M_changes for instance. According to the present invention, the loss regularizer R is configured for implementing a set of rules for ensuring said compatibility, wherein each of said rules defines a requirement to be satisfied by a relation between said masks M_T_1, M_T_2 and M_T_changes during the training for representing a real temporal evolution of said part, notably when considering a specific disease or a specific real (physical) evolution of a biological tissue of said part.

Preferentially, for said training of the main ML algorithm, said loss regularizer R is generally formulated as follows:

$$R = d(LM\_changes|changes{=}enlargement,\ SM2 - SM1 \cap SM2)$$
$$+ d(LM\_changes|changes{=}shrinkage,\ SM1 - SM1 \cap SM2)$$
$$+ d(LM\_changes|changes{=}stable,\ SM1 \cap SM2) \qquad \text{Eq. 1}$$

wherein d(t,v) is a similarity function providing a measure of a similarity between t and v, wherein t and v represent each a segmentation map (or mask) of a same anatomical region of said part, but obtained from two different maps (e.g. images) of said same anatomical region (typically from longitudinal maps in the present case). LM_changes represents a longitudinal change mask showing longitudinal changes between a first map and a second map representing said same anatomical region of said part at two different time points T1 and T2, SM1 and SM2 are respectively a first and second segmentation mask of said anatomical region obtained respectively at T1 and T2 and *LM_changes|changes*=x, with x = *enlargement,* or *shrinkage,* or *stable,* denotes the region of LM_changes where a change corresponding to x was detected, and $\cap$ denotes the intersection between the two considered segmentation maps. In particular, "enlargement" and "shrinkage" refer respectively to an increase of the number of voxels representing an anatomical region segmented in SM2 with respect to the representation of said anatomical region in SM1 (e.g. it can be a new segmented region appearing in SM2 with respect to SM1 or an increase, in SM2, of the number of voxels associated to an anatomical region that was already segmented in SM1) and to a decrease of a number of voxels associated to an anatomical region segmented in SM2 with respect to a representation of said anatomical region segmented in SM1. In particular, the similarity function d can be any appropriate similarity function, for instance a Dice between the two considered segmentation maps t and v, or an L1 distance, or an L2 distance, or a Hausdorff distance. Thanks to the use of said loss regularizer R for training the main ML algorithm, the latter, after its training, is able to optimize or maximize the compatibility between M_change, M1, and M2. By compatibility, it has to be understood the fact that areas or pixels or voxels or regions defined as stable in LM_changes are represented in both SM1 and SM2, areas defined as enlarging are only represented in SM2, and areas defined as shrinking are only represented in SM1.

If both N_cross and N_long are trained during the training of the main ML algorithm, then Eq. 1 becomes:

$$R = d(M\_changes|changes{=}enlargement,\ M2 - M1 \cap M2)$$

$$+\ d(M\_changes|changes{=}shrinkage,\ M\_T\_1 - M1 \cap M2)$$

$$+\ d(M\_changes|changes{=}stable,\ M1 \cap M2)\ \text{Eq. 1a}$$

If only N_cross is trained during the training of the main ML algorithm, then Eq. 1 becomes:

$$R = d(M\_T\_changes|changes{=}enlargement,\ M2 - M1 \cap M2)$$

$$+\ d(M\_T\_changes|changes{=}shrinkage,\ M1 - M1 \cap M2)$$

$$+\ d(M\_T\_changes|changes{=}stable,\ M1 \cap M2)\qquad \text{Eq. 1b}$$

Finally, if only N_long is trained during the training of the main ML algorithm, then Eq. 1 becomes:

$$R = d(M\_changes|changes{=}enlargement,\ M\_T\_2 - M\_T\_1 \cap M\_T\_2)$$

$$+\ d(M\_changes|changes{=}shrinkage,\ M\_T\_1 - M\_T\_1 \cap M\_T\_2)$$

$$+\ d(M\_changes|changes{=}stable,\ M\_T\_1 \cap M\_T\_2)\quad \text{Eq. 1c}$$

Preferentially, the loss regularizer R is added to a loss L_cross used for training N_cross and/or to a loss L_long used for training N_long according to

$$L\_cross = d_1(M\_cross,\ GT\_cross) + \gamma R, \qquad \text{Eq. 2}$$

$$L\_long = d_1(M\_long,\ GT\_long) + \gamma R \qquad \text{Eq. 3}$$

wherein GT_cross and GT_long are respectively the ground truth masks for cross-sectional segmentation obtained from the prior, or respectively current map, and the ground truth mask for longitudinal segmentations when considering said prior and current map, $d_1$ is a similarity measure or function, y is a constant (typically configured for adding a weight to R), wherein M_cross can be respectively M1 (when GT_cross is obtained from the prior map) or M2 (when GT_cross is obtained from the current map), and wherein M_long is M_changes. Preferentially, $d_1$ is a Dice, or a cross-entropy, or a L1 distance.

**Brief Description of the Drawing**

For a more complete understanding of the present disclosure, and the advantages thereof, reference is now made to the following descriptions taken in conjunction with the accompanying drawings, wherein like numbers designate like objects, and in which:

Fig. 1 illustrates an example of limited sensitivity of longitudinal pipelines when relying on cross-sectional results;

Fig. 2 illustrates a preferred embodiment of a system according to the invention;

Fig. 3 illustrates a flowchart of a method according to the invention;

Fig. 4 shows a first preferred training method for training a main ML algorithm according to the invention;

Fig. 5 shows a second preferred training method for training a main ML algorithm according to the invention;

Fig. 6 shows a third preferred training method for training a main ML algorithm according to the invention;

Fig. 7 provides an example of consistency between cross-sectional and longitudinal segmentations in the case of multiple sclerosis lesions.

**Description of Examples**

Figure 1 illustrates the problematic at the origin of the present invention, which is related to longitudinal analysis of biological objects. A first image of a part of biological object is acquired at a first time point T1, and a second image of said part is acquired at a second time point T2. For the first image and the second image, a first ground truth segmentation GT_1 and respectively a second ground truth segmentation GT_2 are acquired. Also, a cross-sectional segmentation is performed on the first image using a known in the art technique and results in a first segmentation mask M1. The same is done for the second image, and results in a second segmentation mask M2. Unfortunately, the process for obtaining said segmentation is not perfect and may comprise false positive and false negative which will result in an underestimation 108 and/or overestimation 109 of the real changes 110 of said part that took place between T1 and T2. Thus, the variability of the cross-sectional algorithm or method is a limiting factor for the detection of longitudinal changes. For that reason, the present invention proposes a new method for detecting longitudinal changes. The proposed method can be applied to any type of longitudinal analysis of a biological object. For instance, it can be used for to detecting or identifying volumetric changes in a biological object, for instance volumetric changes in multiple sclerosis lesions of said biological object, or for tumor monitoring, or musculoskeletal degeneration (i.e. changes in bone density), or morphometry-based cognitive decline prediction, etc. In other words, the claimed method may find various concrete applications, wherein detecting longitudinal changes might be relevant for a physician having to assess said changes.

Figure 2 describes a typical system 200 for detecting longitudinal changes appearing in longitudinal maps of a part of a biological object 210 according to the invention. Said biological object 210 is for instance a brain of a patient. The system 200 comprises a control unit 201 configured for acquiring longitudinal maps representing said part of the biological object 210 at different time points, notably at least at a first time point and at a second time point different from the first time point, so that at least a set comprising at least two longitudinal maps, namely a first longitudinal map and a second longitudinal map, each representing said part (i.e. a same anatomical region) but at a different time point be acquired by the system 200. The control unit 201 preferentially comprises a processor and a memory, wherein said processor is configured for running a trained main ML algorithm configured for detecting longitudinal changes in each set of longitudinal maps. The system 200 further comprises an interface 202 for providing an output of the trained main ML algorithm, said output being a change mask M_change and/or a segmentation of at least one of the longitudinal maps, said interface 202 comprising for instance a display 203 for displaying said output. Preferentially, the control unit 201 is connected to an imaging apparatus 204, for instance an MRI apparatus, for directly acquiring said longitudinal maps. Alternatively, said longitudinal maps might be provided to the system 201 via an external memory.

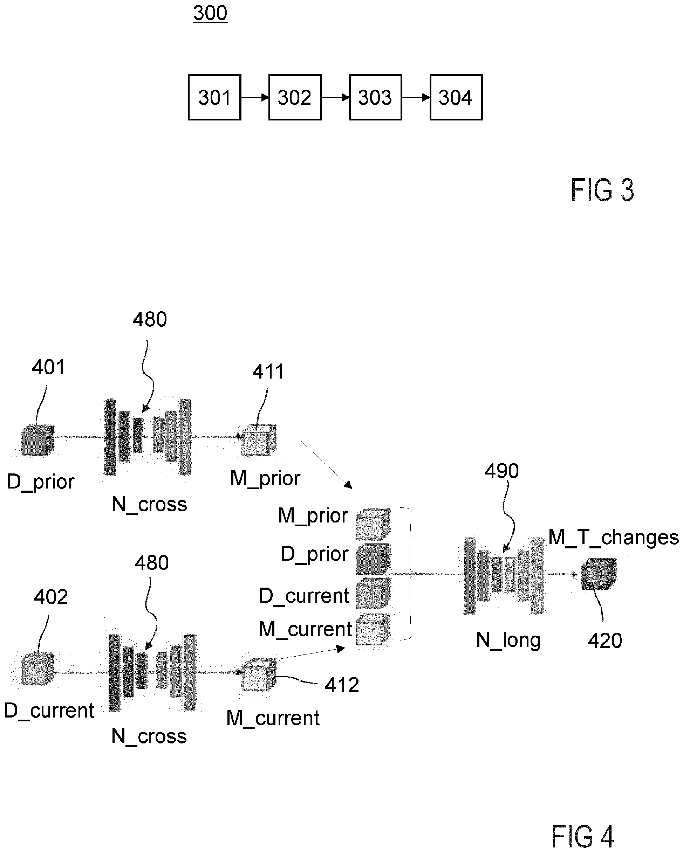

We will now describe in more detail a preferred embodiment of the method according to the invention through Figures 2 to 7, wherein Figure 3 describes the different steps of the method 300 carried out by the system 200 according to the invention.

At step 301, the system 200 according to the invention acquires a first map representing a part of the biological object 210 at a first time point T1. Said first map might be an image, called hereafter D_prior, of said part that has been acquired at the first time point T1. For said acquisition of D_prior, any imaging technique or apparatus, like an MRI apparatus, can be used. Said first map might be also a preprocessed image obtained from D_prior. In particular, said first map might combine imaging and non-imaging data, or might even comprise only non-imaging data.

At step 302, the system 200 according to the invention acquires a second map representing said part of the biological object 210 at a second time point T2 different from the first time point. Said second map might be an image, called hereafter D_current, of said part that has been acquired at the second time point T2. For said acquisition of D_current, any imaging technique or apparatus, like an MRI apparatus, can be used. Preferentially, the same acquisition technique is used for acquiring D_prior and D_current. Said second map might be also a preprocessed image obtained from D_current. In particular, said second map might combine imaging and non-imaging data, or might even comprise only non-imaging data. However, and preferentially, the second map comprises the same type of data as the first map, that is, if the first map comprises for instance only imaging data, then the second map comprises also only imaging data. Preferentially, D_prior and D_current are cross-sectional images of said part, showing both a same cross-sectional view of said part. Indeed, the first map and the second map show a same view of said part, but at different times. Preferentially, the first map and the second map are registered to each other, or to a common space, so that a same voxel in the first and second map refers to a same location in said part of the biological object.

At step 303, the control unit 201 uses the first map and the second map as input to a trained main ML algorithm. The latter is configured for outputting a change mask M_changes and/or a segmentation mask of at least one of the first and second maps. The change mask M_changes shows changes between the first map and the second map that have been detected by the main ML algorithm. It might further show one or several stable regions, i.e. regions which did not change between the first map and the second map. In other words, the change mask M_changes comprises the detected changes and stable regions. The segmentation mask shows segments or regions, within the concerned map, that can be assigned a same label and/or that share a same biological tissue characteristic and/or property and/or are of particular interest. For instance, said segmentation can be a lesion segmentation performed for said part at two different time points, giving rise to a first segmentation mask obtained from the first map and a second segmentation mask obtained from the second map. Basically, the segmentation mask obtained from the first map is called the first segmentation mask M1, while the segmentation mask obtained from the second map is called the second segmentation mask M2.

According to the present invention, the main ML algorithm has been trained for optimizing a compatibility between M1, M2, and M_changes. This optimization of the compatibility improves the consistency between the segmentation masks M1 and M2, and the longitudinal mask M_changes. By "training for optimizing the compatibility", the present invention refers to a use of a set of rules that penalizes incoherent results between a first segmentation mask and/or a second segmentation mask, and a longitudinal change mask during the training of the main ML algorithm, which will be explained in more detail in the following. In particular, said rules requires that changes detected in the longitudinal change mask during the training shall result from a coherent combination of the first and second segmentation masks (for example, in case of multiple sclerosis lesions, regions of said part of the biological object that are identified as enlarging at a current time point compared to a prior time point are supposed to be present in the segmentation mask obtained from the map representing said part at the current time point, but not in the segmentation mask obtained from the map representing said part at the prior time point. And vice versa, regions that will be labeled as lesion shrinkage, must be segmented in the segmentation mask obtained from the map representing said part at the prior timepoint but not be visible in the segmentation mask obtained from the map representing said part at the current time point). Said rules are embodied in a loss regularizer R that is used for training the main ML algorithm, for instance by adding it to a loss function used for the training of said main ML algorithm.

At step 304, the system 200 provides, notably via its interface 202, the output of the trained main ML algorithm. For instance, said change mask M_changes and/or said segmentation mask of at least one of the first and second maps might be displayed on a display of the system 200 according to the invention.

We will now describe in more detail the training of the main ML algorithm. As already explained, the main ML algorithm comprises a first ML algorithm, which is N_cross, and/or a second ML algorithm, which is N_long. N_cross and N_long can be any appropriate trainable algorithm, like neural networks. They can be for instance respectively a first CNN and a second CNN. According to the present invention, N_cross is in charge of segmenting a map received as input and N_long is in charge of detecting longitudinal changes between longitudinal maps received in input. There might be various ways of training the main ML algorithm, but all are trained to provide an optimized compatibility between the first segmentation mask M1, the second segmentation mask M2, and the change mask M_change that represents changes that occurred between a first map from which M1 has been obtained and a second map from which M2 has been obtained, said first and second maps being longitudinal maps. For instance, the main ML algorithm may comprise N_cross, and said training of the main ML algorithm comprises training N_cross while receiving ground truth maps for longitudinal changes, or the main ML algorithm may comprise N_long, and the training of the main ML algorithm comprises training N_long, wherein pairs of prior and current ground truth segmentation masks are used for said training.

In particular, Figures 4, 5, and 6 illustrate different methods for training the main ML algorithm, wherein N_cross and N_long are CNN. According to the training illustrated in Fig. 4, for each training biological object of a set of training biological objects, the system applies, first, N_cross 480 to a first map 401 representing a part of the concerned training biological object at a first time and to a second map 402 representing said part at a second time, N_cross 480 outputting a first segmentation mask M1 411 for the first map 401 and a second segmentation mask M2 412 for the second map 402, and second, it applies N_long 490 to M1 411, M2 412, the first map 401 and the second map 402, while using as training output a training change mask M_T_changes 420 that is a labelled map representing the changes, for said part of the concerned training biological object, detected between the first map 401 and the second map 402. For each training biological object, the first map of its part and the second map of its part represent said part at two different times, which might be different from the times at which the part of another training biological object was represented by its related first map and second map. At the end, for each training biological object, M1, M2, the first map, and the second map related to said training biological object form an input training dataset, and M_T_changes defined for said training biological object forms the output training dataset. The main ML algorithm, in the present case N_long, is then trained based on the input and output training datasets defined for all training biological objects of said set. In particular, the first map and the second map are preferentially and respectively a prior image D_prior and a current image D_current of said part acquired respectively at said first time and said second time for the concerned training biological object, and the first segmentation mask M1 and second segmentation mask M2 are in that case called respectively M_prior and M_current.

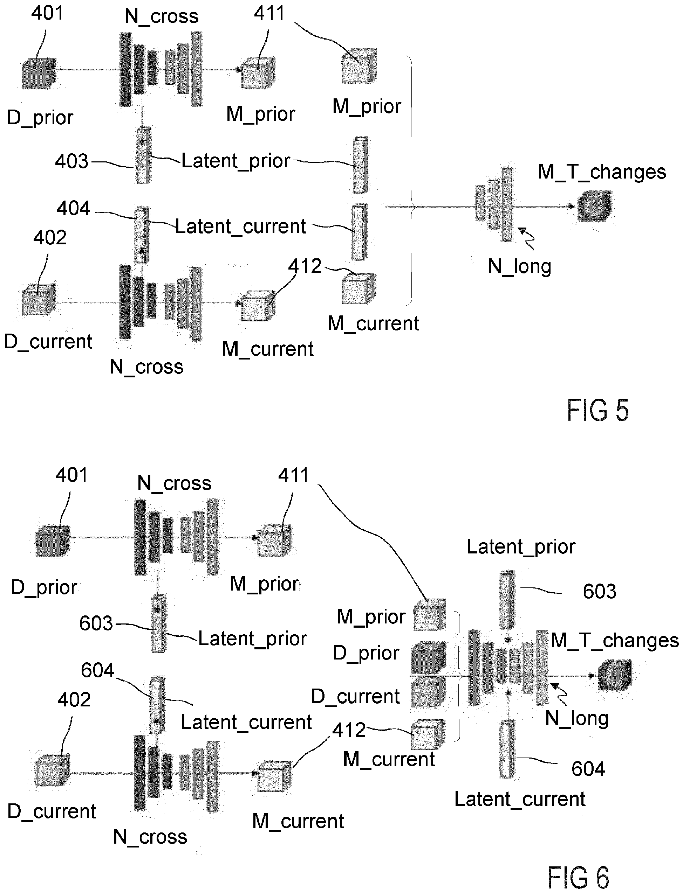

The training illustrated in Fig. 5 is identical to the training illustrated in Fig. 4, apart that instead of using, for each training biological object, the first map 401 and the second map 402 as part of the input training datasets to N_long, a first preprocessed map 403 and a second preprocessed map 404 are used together with the first segmentation map 411 and second segmentation map 412 as input training datasets to N_long. The first preprocessed map 403 is a map computed by N_cross from the first map 401 and extracted from N_cross, and which is different from the first segmentation mask 411 outputted by N_cross. It is typically an intermediate output of N_cross, e.g. a first latent feature map extracted from an intermediate layer of N_cross, e.g. from an encoder part of N_cross. In particular, if the first map is D_prior, then said first preprocessed map 403 might be a prior latent feature map Latent_prior. Similarly, the second preprocessed map 404 is a map computed by N_cross from the second map 402 and extracted from N_cross, and which is different from the second segmentation mask 412 outputted by N_cross. It is typically an intermediate output of N_cross, e.g. a second latent feature map extracted from said intermediate layer of N_cross, e.g. from an encoder part of N_cross. In particular, if the second map is D_prior, then said second preprocessed map 404 might be a current latent feature map Latent_current. For instance, and notably in case of N_cross being an encoderdecoder neural network, part or all encoder part of N_cross that is obtained for the first map and part or all encoder part of N_cross that is obtained for the second map might form, together with the first segmentation mask and the second segmentation mask, the training input datasets of N_long, the output training datasets comprising as usual M_T_changes.

Figure 6 illustrates still another way of training N_long, wherein, for each training biological object, the first segmentation mask 411, the first map 401, the second segmentation mask 412, and the second map are used as input training datasets, and wherein, additionally, a first information 603 extracted from a latent feature map of N_cross for the first map 401 and a second information 604 extracted from a latent feature map of N_cross for the second map 402 is further inputted in deeper layers of the neural network N_long for its training. In other words, according to the present invention, information extracted from N_cross is used during the training of N_long. Also, for the training of N_cross, information extracted from N_long, might be used for the training of N_cross.

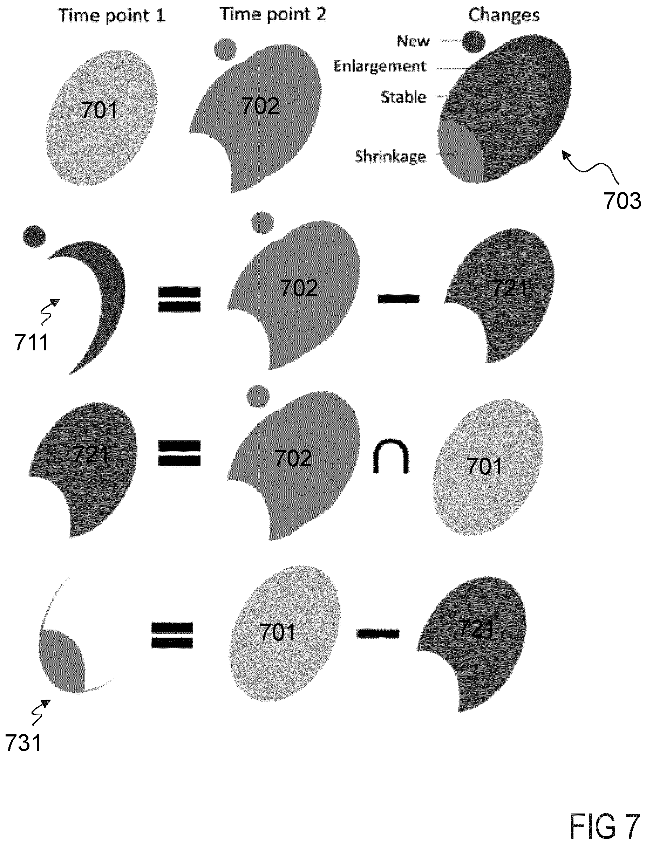

Preferentially, each of the different trainings of the main ML algorithm involves a use of a loss regularizer R for ensuring a compatibility between the first segmentation mask(e.g. M_prior), the second segmentation mask(e.g. M_current), and the longitudinal change mask as shown in Eq. 1. In other words, whatever the method for training, a regularized loss R is preferentially calculated and used for said training. The loss regularizer R is a function of M1, M2 and M_T_changes when training N_cross only, is a function of M_changes, M_T_1 and M_T_2 when training N_long only, is a function of M_changes, M1 and M2 when training both N_cross and N_long, and in each case is configured for making the changes detected in the longitudinal change mask coherent with the changes obtained when comparing the first and second segmentation masks. Indeed, the changes detected by N_long shall be reflected by a combination of M1 and M2 (or M_T_1 and M_T_2), i.e. by the result of N_cross. The loss regularizer R defines thus a combination of rules defining relations between the first segmentation mask, the second segmentation mask, and the longitudinal change mask, that shall be verified for ensuring a compatibility of the result of N_cross and/or of N_long. An example of such rules is illustrated in Figure 7 for the case of a detection of multiple sclerosis regions. Said rules aims to ensure a consistency between cross-sectional and longitudinal segmentations of the lesions. The first row shows a first segmentation mask 701 of a first map of a part of a biological object acquired at a first time point and a second segmentation mask 702 of a second map of said part of the biological object acquired at a second time point, and a change mask 703 showing all detected changes between the first and second time points. When an enlargement 711 is detected (see the second row), the rule specifies that said enlargement 711 must be equal to the difference between the second segmentation mask 702 and a stable part 721 of the lesion between the two timepoints. In turn, the stable part 721 of the lesion (third row) can be expressed as the intersection between the first segmentation mask 701 and the second segmentation mask 702. Finally, a region identified as shrinking, i.e. a shrinking region 731, (see last row) must be equal to the difference between the first segmentation mask 701 and the stable part 721. Such rules are then expressed in the loss regularizer R function, R = function(first segmentation mask, second segmentation mask, change mask). During the training, for instance, during the training of N_long and/or of N_cross, the loss regularizer function aims at penalizing training results that move away from said rules, i.e. that tend to not satisfy said rules in order to ensure the compatibility between the different masks. This is notably ensured by using a similarity function d for expressing the relationship between the different segmentation and change masks as illustrated in Eq. 1.

Preferentially, the training of N_cross, respectively N_long, uses a loss function to evaluate a candidate set of weights of N_cross, respectively N_long, when mapping a set of input training data to a set of output training data. Said loss function typically seeks to minimize the errors between (i) the output of N_cross, respectively N_long, computed from an inputted set of input training data and (ii) the output training data. This is done for different sets of input training data and output training data, i.e. in our case for different training biological objects. According to the present invention, and contrary to existing techniques, said loss function comprises the loss regularizer R. For instance, notably in the case of CNN, said loss regularizer R might be added to a neural network loss function of N_cross and/or to a neural network loss function of N_long when learning to map the set of input training data to the set of output training data, as shown notably in Eq. 2 and Eq. 3. Of course, other ways of incorporating the loss regularizer into the loss function might be envisaged by the skilled person. In each case, the loss regularizer R is incorporated into the loss function for penalizing inconsistencies between the first segmentation mask, the second segmentation mask, and the change mask that are used for training, i.e. for penalizing outputs of N_cross and/or N_long (i.e. set of weights used for calculating said outputs) that do not satisfy the set of rules represented by the loss regularizer R. This enables to ensure that the trained main ML algorithm will provide a change mask that is consistent with the first and second segmentation masks.

To conclude, the present invention proposes to train a main ML algorithm to map sets of input training data to corresponding sets of output training data while optimizing, during the training and for each set, a compatibility or consistency between (i) a first segmentation mask obtained from a first map and a second segmentation mask obtained from a second map, wherein the first and second maps are longitudinal maps, said first and second segmentation masks being related to the input training data, and (ii) a training change mask, that is related to the output training data and obtained by computing the difference between the first map and the second map. The described technique allows to improve the consistency between the segmentation masks and the change mask by avoiding incoherent results. It also enables a quantitative comparison between timepoints by enforcing numerical consistency between two time points, which would otherwise be biased by the sensitivity limits of N_cross. In particular, according to the present invention, the training of the main ML algorithm is configured for penalizing incoherent results of N_cross and/or N_long using a set of predefined rules embodied in a loss regularizer R that is incorporated to the loss function computed during the training of the concerned algorithm (i.e. N_cross if it penalizes the results of N_cross, resp. N_long if it penalizes the results of N_long). The loss regularizer R is typically a function of said segmentation maps that compares a combination of the latter with predicted longitudinal segmentation, i.e. with the so-called change mask, in order to determine if the segmentation masks and the predicted longitudinal segmentation are coherent.

**List of citations**

[1] Elliott, Colm, et al. "Slowly expanding/evolving lesions as a magnetic resonance imaging marker of chronic active multiple sclerosis lesions." Multiple Sclerosis Journal 25.14 (2019): 1915-1925.

[2] Fartaria, Mário Joao, et al. "Automated detection of white matter and cortical lesions in early stages of multiple sclerosis." Journal of Magnetic Resonance Imaging 43.6 (2016): 1445-1454.

[3] Schmitter, Daniel, et al. "An evaluation of volume-based morphometry for prediction of mild cognitive impairment and Alzheimer's disease." NeuroImage: Clinical 7 (2015): 7-17.

[4] Rey, D., Subsol, G., Delingette, H. & Ayache, N. Automatic detection and segmentation of evolving processes in 3D medical images: Application to multiple sclerosis. Medical Image Analysis 6 (2002): 163-179.

[5] Fartaria, M. J., Kober, T., Granziera, C. & Bach Cuadra, M. Longitudinal analysis of white matter and cortical lesions in multiple sclerosis. NeuroImage Clin. 23, 101938 (2019).

[6] Kamraoui, Reda Abdellah, et al. "Longitudinal detection of new MS lesions using deep learning." Frontiers in Neuroimaging 1 (2022): 948235.

**Claims**

1. Method (300) for analyzing a map of a part of a biological object (210) , the method (300) comprising:

   - acquiring (301) a first map (401) representing said part at a first time point;
   - acquiring (302) a second map (402) representing said part at a second time point different from the first time point;
   - using (303) the first map (401) and the second map (402) as input to a trained main machine learning (ML) algorithm configured for providing an output that comprises (i) a change mask M_changes highlighting or showing longitudinal changes between the first map (401) and the second map (402) and/or (ii) a segmentation of at least one of said first and second maps, wherein the segmentation of the first map results in a first segmentation mask M1 (411) and the segmentation of the second map results in a second segmentation mask M2 (412), wherein said main ML algorithm has been trained for optimizing, notably maximizing, a compatibility between M1, M2, and said change mask M_changes;
   - providing (304), via an interface (202), said output of the trained main ML algorithm.

2. Method (300) according to claim 1, wherein, for optimizing said compatibility, the main ML algorithm has been trained by using a loss regularizer R, which ensures, after said training, said compatibility between M1, M2, and M_changes.

3. Method (300) according to claim 2, wherein the loss regularizer R used for training the main ML algorithm is configured for implementing a set of rules for ensuring said compatibility.

4. Method (300) according to one of the claims 2 or 3, wherein, during the training of the main ML algorithm, the loss regularizer R is added to a loss L_cross used for training N_cross and/or to a loss L_long used for training N_long, wherein N_cross is a first ML algorithm of the main ML algorithm and N_long is a second ML algorithm of said main ML algorithm, wherein N_cross is configured for segmenting a single, cross-sectional map received in input, and wherein N_long is configured for detecting longitudinal changes between two longitudinal maps received in input.

5. Computer-implemented method for providing a trained main machine learning (ML) algorithm configured for outputting a change mask M_changes when receiving as input longitudinal maps of a part of a biological object (210), wherein said change mask M_changes is configured for highlighting or showing longitudinal changes between said longitudinal maps, wherein said main ML algorithm comprises a second ML algorithm, called hereafter N_long (490), and optionally a first ML algorithm, called hereafter N_cross (480), wherein N_cross (480) is configured for segmenting a map received as input and for providing as output a segmentation mask for the received map, wherein N_long (490) is configured for detecting longitudinal changes between two longitudinal maps received as input, the computer-implemented method comprising:

   - acquiring a first N_long input training dataset comprising, for each training biological object of a set of training biological objects, at least one map representing said part at a first time point and at least one corresponding map representing said part at a second time point different from the first time point, so that, for each training biological object, its part is represented by at least two maps - also called longitudinal maps - representing the part at two different time points, namely said first time point and said second time point;
   - acquiring a second N_long input training dataset comprising, for each training biological object of said set of training biological objects, for each map representing the part at the first time point, a first training segmentation mask M_T_1 representing said part of the training biological object, wherein said first training segmentation mask M_T_1 has been obtained from said map representing said part at the first time point for said training biological object, and, for each corresponding map representing the part at the second time point, a corresponding second training segmentation mask M_T_2 representing said part, wherein said second training segmentation mask M_T_2 has been obtained from said map representing said part at the second time point different from the first time point;
   - acquiring an N_long output training dataset comprising, for each training biological object of said set of training biological objects, and for each couple formed by a first segmentation mask and its corresponding second segmentation mask, a related training change mask M_T_changes (420) representing longitudinal changes that took place between said map representing the training biological object part at the first time point and its corresponding map representing said part of the training biological object at the second time point;
   - for each of said training biological objects, training N_long for said detection of longitudinal changes based on said first N_long input training dataset, said second N_long input training dataset, and said N_long output training dataset defined for the concerned training biological object;
   - providing the trained main ML algorithm via an output interface;
   wherein, for each training biological object, the main ML algorithm is trained to optimize or maximize a compatibility between the first training segmentation mask M_T_1, the second training segmentation mask M_T_2, and M_changes.

6. Computer implemented method according to claim 5, wherein, for each training biological object, said first training segmentation mask M_T_1 (411) and said second training segmentation mask M_T_2 are respectively:

   - a segmentation mask outputted by N_cross when processing said map representing the part of the training biological object at the first time point, and a segmentation mask outputted by N_cross when processing said map representing the part of the training biological object at the second time point; or
   - a prior ground truth segmentation mask GT_prior obtained by labelling voxels and/or regions of said map representing the part of the training biological object at the first time point, and a current ground truth segmentation mask GT_current that is obtained by labelling voxels and/or regions of said map representing the part of the training biological object at the second time point.

7. Computer implemented method according to claim 5 or 6, comprising training N_cross simultaneously to training N_long, or training fully or partially N_cross before training N_long, or training fully or partially N_long before training N_cross.

8. Computer implemented method according to one of the claims 6-7, wherein, for optimizing said compatibility, the method comprises using a loss regularizer R configured for ensuring said compatibility between the first training segmentation mask M_T_1, the second training segmentation mask M_T_2, and M_changes.

9. Computer implemented method according to claim 8, wherein said loss regularizer R is a function of the first training segmentation mask M_T_1, the second training segmentation mask M_T_2, and M_changes that is configured for implementing a set of rules for ensuring said compatibility, wherein each of said rules defines a requirement to be satisfied by a relation between said masks M_T_1, M_T_2, and M_changes for representing a real temporal evolution of said part.

10. Computer implemented method according to claim 8 or 9, wherein said loss regularizer R is formulated as follows:

$$R = d(M\_changes|changes=enlargement, M\_T\_2 - M\_T\_1 \cap M\_T\_2)$$
$$+ d(M\_changes|changes=shrinkage, M\_T\_1 - M\_T\_1 \cap M\_T\_2)$$
$$+ d(M\_changes|changes=stable, M\_T\_1 \cap M\_T\_2)$$

wherein d(t,v) is a similarity function providing a measure of a similarity between t and v, wherein t and v represent each a segmentation mask of a same anatomical region of said part, but obtained from two different maps of said same anatomical region, and *M_changes|changes*=x, with x = *enlargement,* or *shrinkage,* or *stable,* denotes the region of M_changes where a change corresponding to x was detected, and $\cap$ denotes the intersection between the two considered segmentation masks.

11. Computer implemented method according to claim 10, wherein the similarity function d is a Dice between the two considered segmentation masks t and v, an L1 distance, or an L2 distance, or a Hausdorff distance.

12. Computer implemented method according to one of the claims 8-11, wherein the loss regularizer R is added to a loss L_cross used for training N_cross and/or to a loss L_long used for training N_long according to

$$L\_cross = d_1(M\_cross, GT\_cross) + \gamma R,$$

$$L\_long = d_1(M\_long, GT\_long) + \gamma R$$

wherein GT_cross and GT_long are respectively the ground truth masks for cross-sectional segmentation obtained from a prior, or respectively a current, map, and the ground truth mask for longitudinal segmentations when considering said prior and current maps, $d_1$ is a similarity measure, y is a constant, wherein M_cross can be respectively M1 (when GT_cross is obtained from the prior map) or M2 (when GT_cross is obtained from the current map), and wherein M_long is M_changes.

13. Computer implemented method according to claim 12, wherein $d_1$ is a Dice, or a cross-entropy, or a L1 distance.

14. Computer-implemented method for providing a trained main machine learning (ML) algorithm configured for outputting a segmentation of at least one of longitudinal maps of a part of a biological object (210) when receiving as input said longitudinal maps, wherein said main ML algorithm comprises a first ML algorithm, called hereafter N_cross (480), and optionally a second ML algorithm, called hereafter N_long (490), wherein N_cross (480) is configured for segmenting a map received as input and for providing as output a segmentation mask for the received map, wherein N_long (490) is configured for detecting longitudinal changes between two longitudinal maps received as input by outputting a change mask M_changes representing said longitudinal changes, wherein training the main ML algorithm comprises training at least N_cross (480), the computer-implemented method comprising:

- acquiring an N_cross input training dataset comprising, for each training biological object of a set of training biological objects, at least one map representing said part at a first time point, called hereafter the first map (401), and at least one map representing said part at a second time point different from the first time point, called hereafter the second map (402), so that, for each training biological object, its part is represented by at least two maps - also called longitudinal maps - representing the part at two different time points, namely said first time point and said second time point;
- for each training biological object, acquiring an N_cross output training dataset comprising, for each of said training biological objects, and for each of the maps representing said part at the first time point, a segmentation mask, called hereafter prior ground truth mask GT_prior, and/or, for each of the maps representing said part at the second time point, another segmentation mask called hereafter current ground truth mask GT_current;
- training N_cross (480) for said segmentation of longitudinal images based on the N_cross input training dataset and the N_cross output training dataset,
- providing the trained main ML algorithm via an output interface;
wherein the main ML algorithm is trained to optimize or maximize a compatibility between M1, and/or M2, and M_T_changes (420), wherein, for each training biological object (210), and, for the concerned training biological object, for each couple formed by a first map (401) and a second map (402), there is a corresponding M_T_changes (420) that is a change mask representing longitudinal changes between said first map (401) and said second map (402) of the couple.

15. System (200) for analyzing a map of a part of a biological object (210), the system (200) comprising:

- a control unit (201) configured for acquiring longitudinal maps representing said part of the biological object (210) at least at a first time point and at a second time point different from the first time point, said control unit (201) comprising a processor and a memory, said processor being configured for running a trained main ML algorithm;
- an interface (202) for providing an output of the trained main ML algorithm, said output comprising a change mask M_changes and/or a segmentation of at least one of the longitudinal maps;
said system (200) being **characterized in that** its control unit is configured for carrying out the steps of the method (100) according to one of the claims 1 to 4.

| T1 | T2 | CHANGES |
|---|---|---|

FIG 1

FIG 2

<u>300</u>

FIG 3

FIG 4

401

N_cross

411

D_prior

M_prior

M_prior

403 — Latent_prior

404 — Latent_current

402

D_current

N_cross

412

M_current

M_current

M_T_changes

N_long

FIG 5

401

N_cross

411

D_prior

M_prior

Latent_prior

603 — Latent_prior

603

M_prior

M_T_changes

D_prior

D_current

604 — Latent_current

402

N_long

412

M_current

D_current

N_cross

M_current

604

Latent_current

FIG 6

FIG 7

Europäisches
Patentamt

European
Patent Office

Office européen
des brevets

# EUROPEAN SEARCH REPORT

**Application Number**

EP 24 20 2132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHMIDT PAUL ET AL: "Automated segmentation of changes in FLAIR-hyperintense white matter lesions in multiple sclerosis on serial magnetic resonance imaging", NEUROIMAGE: CLINICAL, vol. 23, 1 January 2019 (2019-01-01), pages 1-11, XP093253704, ISSN: 2213-1582, DOI: 10.1016/j.nicl.2019.101849 * abstract * * figures 1,4 * * sections 3.1, 4.2, 4.3 * | 1-15 | INV. G06T7/00 G06T7/11 G06T7/194 |
| A | SEPAHVAND NAZANIN MOHAMMADI ET AL: "CNN Detection of New and Enlarging Multiple Sclerosis Lesions from Longitudinal Mri Using Subtraction Images", 2020 IEEE 17TH INTERNATIONAL SYMPOSIUM ON BIOMEDICAL IMAGING (ISBI), IEEE, 3 April 2020 (2020-04-03), pages 127-130, XP033773666, DOI: 10.1109/ISBI45749.2020.9098554 [retrieved on 2020-05-21] * abstract * * figures 1,3 * | 1-15 | TECHNICAL FIELDS SEARCHED (IPC) G06T |
| A | KAMRAOUI REDA ABDELLAH ET AL: "Longitudinal detection of new MS lesions using deep learning", FRONTIERS IN NEUROIMAGING, vol. 1, 25 August 2022 (2022-08-25), pages 1-14, XP093253234, ISSN: 2813-1193, DOI: 10.3389/fnimg.2022.948235 * abstract * * figures 1-3 * * section 2.2 * | 1-15 | |

The present search report has been drawn up for all claims

| Place of search | Date of completion of the search | Examiner |
|---|---|---|
| Munich | 5 March 2025 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ELLIOTT, COLM et al.** Slowly expanding/evolving lesions as a magnetic resonance imaging marker of chronic active multiple sclerosis lesions. *Multiple Sclerosis Journal*, 2019, vol. 25 (14), 1915-1925

- **FARTARIA, MÁRIO JOAO et al.** Automated detection of white matter and cortical lesions in early stages of multiple sclerosis. *Journal of Magnetic Resonance Imaging*, 2016, vol. 43 (6), 1445-1454

- **SCHMITTER, DANIEL et al.** An evaluation of volume-based morphometry for prediction of mild cognitive impairment and Alzheimer's disease. *NeuroImage: Clinical*, 2015, vol. 7, 7-17

- **REY, D.** ; **SUBSOL, G.** ; **DELINGETTE, H.** ; **AYACHE, N.** Automatic detection and segmentation of evolving processes in 3D medical images: Application to multiple sclerosis. *Medical Image Analysis*, 2002, vol. 6, 163-179

- **FARTARIA, M. J.** ; **KOBER, T.** ; **GRANZIERA, C.** ; **BACH CUADRA, M**. Longitudinal analysis of white matter and cortical lesions in multiple sclerosis. *NeuroImage Clin.*, 2019, vol. 23, 101938

- **KAMRAOUI, REDA ABDELLAH et al.** Longitudinal detection of new MS lesions using deep learning. *Frontiers in Neuroimaging*, 2022, vol. 1, 948235